# EUROPEAN PATENT APPLICATION

(11) **EP 4 417 733 A1**
(43) Date of publication of application: **21.08.2024**
(21) Application number: 22863685.8
(22) Date of filing: 28.10.2022
(51) Int. Cl.: C25B 1/04, C25B 1/00, C25B 9/23, C25B 15/08

(54) **SEAWATER NON-DESALINATION IN-SITU DIRECT ELECTROLYSIS HYDROGEN PRODUCTION METHOD, APPARATUS, AND SYSTEM**

(71) Applicant: Shenzhen University, Shenzhen, Guangdong 518051 (CN); Dongfang Electric (Fujian) Innovation Institute Co., Ltd, Fuzhou, Fujian 350100 (CN)
(72) Inventor: XIE, Heping, Shenzhen, Guangdong 518051 (CN); LIU, Tao, Shenzhen, Guangdong 518051 (CN); ZHAO, Zhiyu, Shenzhen, Guangdong 518051 (CN); WU, Yifan, Shenzhen, Guangdong 518051 (CN)
(74) Representative: Ipside
(86) International application number: PCT/CN2022/128225
(87) International publication number: WO 2023/030551

(57) **Abstract**

This invention discloses a method, device, and system for the direct electrolysis of seawater without desalination for hydrogen production. By immersing the direct electrolysis device for hydrogen production from seawater without desalination directly into seawater, driven by the pressure difference at the interface between seawater and the self-driven electrolyte, seawater continuously enters the device through the solution mass transfer layer. The self-driven electrolyte induces the water to enter the electrolyte solution, while the hydrophobic action of the solution mass transfer layer effectively blocks non-water impurities in the solution. During electrolysis, the water in the self-driven electrolyte is consumed to produce hydrogen and oxygen, inducing the regeneration of the electrolyte, maintaining the pressure difference at the interface, and achieving a self-circulating excitation drive without additional energy consumption. When the amount of water solution induced by the self-driven electrolyte equals the amount of water consumed for hydrogen production, a dynamically stable and energy-efficient method and system for the direct electrolysis of seawater without desalination for hydrogen production are formed.

## Description

### Technical Field

The invention belongs to the field of electrochemistry, specifically, it relates to a method, device, and system for producing hydrogen through the direct electrolysis of seawater without desalination.

### Background Art

Hydrogen energy has advantages such as wide sources, storability, multiple uses, zero carbon, zero pollution, and high energy density, making it a key component of the future energy sector. Currently, there are two methods for obtaining hydrogen energy through water electrolysis: one is the direct use of natural water sources such as seawater, river water, or lake water. Taking seawater electrolysis for hydrogen production as an example, it faces the following problems: ① The composition of seawater is complex and varies with seasons, climate, temperature, region, and human activities, making direct hydrogen production devices incompatible in different regions; ② The highest content of Cl⁻ in seawater can be oxidized during the oxygen evolution reaction, producing toxic, environmentally harmful, and corrosive ClO⁻ and Cl₂; ③ Direct hydrogen production from seawater has low electrolysis efficiency due to the small concentration of H+ and OH⁻ ions or the inability of buffer molecules to transport OH- and H+ at the cathode and anode, respectively, necessitating the use of additives or ion exchange membranes, which significantly increases costs and maintenance due to the membrane's sensitivity to impurities; ④ Local pH differences during electrolysis may cause precipitation with calcium and magnesium ions, requiring acid treatment and generating additional costs. The second method involves purifying various non-pure water solutions to produce pure water for use in electrolysis cells. Still taking seawater as an example, it requires the construction of desalination plants on the coast, significantly increasing costs in construction, operation, manpower, and maintenance; and it is difficult to utilize offshore wind power to form an integrated marine green hydrogen production system in situ, making it challenging to achieve stable storage of renewable energy, a complementary multi-energy system, and the construction of offshore energy ecological islands.

### Summary of the Invention

An In view of this, to solve the technical problem of directly using natural water resources such as seawater, river water, and lake water, which are complex in composition and widely distributed, for electrolysis hydrogen production without secondary purification, this invention aims to provide a method, device, and system for hydrogen production through direct electrolysis of seawater without desalination, fundamentally solving the problems of ion exchange membrane failure, catalyst deactivation, low conversion efficiency, alkaline precipitation, and toxic gas production in electrolysis hydrogen production from seawater; meanwhile, it facilitates the future transformation of hydrogen energy without spatial and temporal restrictions, including natural water resources such as seawater, river water, lake water, and even domestic wastewater, industrial wastewater, sludge, etc., for in-situ direct electrolysis hydrogen production.

The technical solution adopted by this invention is: a method for hydrogen production through direct electrolysis of seawater without desalination, which includes:
Blocking seawater (non-pure water solution) and impurity ions through the solution mass transfer layer, selectively allowing the passage of water vapor, and obtaining water without impurity ions through phase change of the solution induced by interface pressure difference or osmotic pressure difference acting on the self-driven electrolyte;
Hydrogen and OH⁻ are produced at the cathode side of the hydrogen production electrolysis through the reduction reaction of water in the self-driven electrolyte, and OH⁻ is transferred from the ion to the anode side of the hydrogen production electrolysis through the anode side to produce oxygen through the oxygen evolution reaction;
During the hydrogen production electrolysis process, as the water in the self-driven electrolyte is continuously consumed by electrolysis, it induces the regeneration of the self-driven electrolyte, maintaining the interface pressure difference, forming a self-circulating excitation drive for hydrogen production without additional energy consumption.

The invention also provides a device for hydrogen production through direct electrolysis of seawater without desalination, which includes:
A self-capturing container that spontaneously obtains water without impurity ions; under the action of interface pressure difference or osmotic pressure difference between seawater (non-pure water solution) and the self-driven electrolyte, the self-capturing container induces the passage of water from the external solution through the solution mass transfer layer, which is then induced to phase change by the self-driven electrolyte;
A catalytic electrolysis module located within the self-capturing container, which divides the self-capturing container into an anode electrolysis chamber and a cathode electrolysis chamber, and forms a self-driven electrolyte at least in the anode electrolysis chamber or cathode electrolysis chamber, where the self-driven electrolyte first electrolyzes in the cathode electrolysis chamber to produce hydrogen and OH⁻, and OH⁻ enters the anode chamber through the catalytic electrolysis module and electrolyzes to produce oxygen.

The catalytic electrolysis module produces oxygen and hydrogen through the chemical principles of catalytic electrolysis, coupling various technologies to form a complete seawater direct electrolysis hydrogen production process without desalination, where the usable self-driven electrolytes include but are not limited to: K₂CO₃, KOH, NaOH, Ca(OH)₂, Na₂CO₃, etc.

Further, the self-capturing container includes:
A porous insulation net groove, which has a cavity inside, and the catalytic electrolysis module is placed within this cavity;
A solution mass transfer layer wrapped around the outside of the porous insulation net groove, blocking impurities in seawater (non-pure water solution);
The catalytic electrolysis module is embedded into the cavity of the porous insulation net groove, dividing the cavity into an anode electrolysis chamber and a cathode electrolysis chamber. Through the hydrophobic action of the solution mass transfer layer, impurity solutions are blocked outside the system, and water without impurity ions in seawater (non-pure water solution) is captured by the self-driven electrolyte, forming an electrolyte in the anode electrolysis chamber and cathode electrolysis chamber.

Further, the catalytic electrolysis module includes:
An ion transfer layer, which is used to transfer OH⁻ ions between the anode electrolysis chamber and the cathode electrolysis chamber, and to block the mixing of O₂ produced on the anode side with H₂ produced on the cathode side; the ion transfer layer includes but is not limited to polyester diaphragm, nylon diaphragm, ceramic porous diaphragm, anion exchange membrane, or PVA and other polymer films;
Anode catalytic electrodes and cathode catalytic electrodes symmetrically arranged on both sides of the ion transfer layer, with anode plates and cathode plates attached to the surfaces of the anode catalytic electrodes and cathode catalytic electrodes, respectively, and the anode plates and cathode plates forming the anode electrolysis chamber and cathode electrolysis chamber with the self-capturing container;
The ion transfer layer, anode catalytic electrodes, cathode catalytic electrodes, anode plates, and cathode plates are all embedded into the inner cavity of the self-capturing container;
Self-driven electrolytes are placed in both the anode electrolysis chamber and cathode electrolysis chamber. After the device is submerged in seawater (non-pure water solution), under the action of interface pressure difference, seawater (non-pure water solution) vapor spontaneously transfers through the solution mass transfer layer, is induced to phase change into liquid water by the self-driven electrolyte, thus immersing the catalytic electrolysis module in the self-driven electrolyte environment within the porous insulation net groove; after starting electrolysis, the cathode catalytic electrode first undergoes a reduction reaction to produce hydrogen, and the generated OH⁻ is transferred to the anode under the action of the ion transfer layer, where it undergoes oxygen evolution reaction on the anode catalytic electrode; the anode catalytic electrode includes but is not limited to: nickel molybdenum, iridium tantalum, ruthenium iridium, NiFe-LDH, NiFeCu alloy catalysts loaded on titanium mesh, foam nickel, etc.; usable cathode catalytic electrodes include but are not limited to: platinum mesh, nickel-plated platinum mesh, FeₓCo_{y}Ni_{z} type catalysts loaded on foam nickel and titanium felt, etc.

Further, the self-capturing container includes:
A solution mass transfer layer, which has a cavity inside, and the catalytic electrolysis module is placed within this cavity;
Anode plates and cathode plates closely attached to both sides of the catalytic electrolysis module, with an anode porous insulation net groove tightly attached between the anode plate and the cavity, and a cathode porous insulation net groove tightly attached between the cathode plate and the cavity;
The anode plates and cathode plates respectively have the anode electrolysis chamber and cathode electrolysis chamber established on them.

Further, the catalytic electrolysis module includes:
An ion transfer layer, which is used to transfer OH⁻ ions between the anode electrolysis chamber and the cathode electrolysis chamber; the ion transfer layer includes but is not limited to polyester diaphragm, nylon diaphragm, ceramic porous diaphragm, anion exchange membrane, or PVA and other polymer films.
Anode catalytic electrodes and cathode catalytic electrodes symmetrically arranged on both sides of the ion transfer layer, with the anode catalytic electrode closely attached to the anode plate, and the cathode catalytic electrode closely attached to the cathode plate.

The invention also discloses a device for hydrogen production through direct electrolysis of seawater without desalination, which includes:
A cavity and a self-driven electrolyte layer located within the cavity, dividing the cavity into an anode electrolysis chamber and a cathode electrolysis chamber, and the anode electrolysis chamber and cathode electrolysis chamber each have a solution mass transfer layer for inducing the transfer of water without impurity ions;
A catalytic electrolysis module located within the cavity, electrolyzing water within the self-driven electrolyte layer in the cathode electrolysis chamber to produce hydrogen and OH⁻, and OH⁻ entering the anode electrolysis chamber through the self-driven electrolyte layer and electrolyzing to produce oxygen.

Further, the catalytic electrolysis module includes:
Anode catalytic electrodes and cathode catalytic electrodes closely attached to both sides of the self-driven electrolyte layer, with the sides of the anode catalytic electrodes and cathode catalytic electrodes closely attached to the anode plates and cathode plates, respectively;
The anode plates and cathode plates each have exhaust grooves established on them, and the sides of the anode plates and cathode plates are respectively attached to the solution mass transfer layer.

Further, the solution mass transfer layer uses a TPU membrane, PTFE membrane, PDMS membrane with a pore size of 0.1~100um; through the hydrophobic action of the solution mass transfer layer, impurity solutions are blocked outside the system, while driving the transfer of water solution, cooperating with the self-driven electrolyte to induce phase change into water without impurities.

Or the solution mass transfer layer is made of graphene, PVDF particles, PTFE particles through spraying, screen printing, electrostatic adsorption to form a porous solution mass transfer layer;
Through the hydrophobic action of the solution mass transfer layer, impurity solutions are blocked outside the system, while driving the transfer of water solution into the electrolyte. The system for hydrogen production through direct electrolysis of seawater without desalination further includes an energy supply module, which is electrically connected to the anode plate and cathode plate, respectively, and supplies power to the anode plate and cathode plate;
The energy supply module can also directly utilize thermal power, hydropower, etc., and further, it can be coupled with wind power, photovoltaic, nuclear energy, and other renewable energy sources to achieve green hydrogen production, thereby realizing the energy transformation of unstable renewable energy sources, and the produced hydrogen energy is beneficial for stable storage.

The invention also provides a system for hydrogen production through direct electrolysis of seawater without desalination, which includes at least one of the aforementioned devices for hydrogen production through direct electrolysis of seawater without desalination, and the system further includes:
At least one oxygen collection unit and at least one hydrogen collection unit, each of the oxygen collection units and hydrogen collection units are respectively connected to the anode electrolysis chamber and cathode electrolysis chamber;
The system can be adaptively designed according to the demand for hydrogen production.

Further, the oxygen collection unit includes: an oxygen scrubber connected to the anode electrolysis chamber, the oxygen scrubber is connected to an oxygen dryer, and the oxygen dryer is connected to an oxygen collection bottle, storing oxygen through the oxygen collection bottle for further use;
The hydrogen collection unit includes: a hydrogen scrubber connected to the cathode electrolysis chamber, the hydrogen scrubber is connected to a hydrogen dryer, and the hydrogen dryer is connected to a hydrogen collection bottle, storing hydrogen through the hydrogen collection bottle for further use.

The beneficial effects of the invention are:
1. By adopting the method, device, and system for hydrogen production through direct electrolysis of seawater without desalination provided by this invention, through the action of interface pressure difference between the solution and the self-driven electrolyte, the self-driven electrolyte spontaneously induces phase change of the solution to form water without impurity ions, and through in-situ catalytic electrolysis for hydrogen production, consumes water in the system's self-driven electrolyte, and induces the electrolyte to cycle and regenerate, maintaining the interface pressure difference, achieving a self-circulating excitation drive for hydrogen production without additional energy consumption, realizing a continuous and stable hydrogen production process without the need for desalination, while the total energy consumption of the system is comparable to that of freshwater electrolysis hydrogen production.
2. By adopting the method, device, and system for hydrogen production through direct electrolysis of seawater without desalination provided by this invention, which uses alkaline substances as self-driven electrolytes, inducing phase change of seawater (non-pure water solution) to form an alkaline electrolyte and electrolyzing the electrolyte to produce hydrogen and oxygen, significantly improves the conductivity of the solution, avoiding the problem of low transmission efficiency of H⁺ and OH⁻ ions in seawater (non-pure water solution) hydrogen production.
3. By adopting the method, device, and system for hydrogen production through direct electrolysis of seawater without desalination provided by this invention, which induces phase change of water without impurity ions, thus breaking through the bottleneck of direct hydrogen production from seawater (non-pure water solution) being restricted by components varying with time, climate, human activities, etc., breaking through the bottleneck of traditional seawater (non-pure water solution) desalination electrolysis hydrogen production, eliminating the need for large-scale construction of desalination plants, greatly reducing costs in construction, operation, manpower, maintenance, etc., and can also be used in any non-pure water solution environment such as sludge, swamps, rivers, or directly in the atmosphere for electrolysis hydrogen production, greatly expanding the source range of hydrogen energy, without spatial and temporal restrictions.
4. By adopting the method, device, and system for hydrogen production through direct electrolysis of seawater without desalination provided by this invention, which spontaneously captures water without impurity ions, breaking through the bottleneck of direct hydrogen production from seawater (non-pure water solution) where chloride ions are oxidized to produce Cl₂ or ClO⁻ and other corrosive and toxic substances, this technology is a green, non-toxic, environmentally friendly process system, and does not contain calcium ions, magnesium ions, and other impurity ions in the solution system, long-term operation will not result in calcium and magnesium precipitation, reducing maintenance costs later on.

### Brief Description of the Drawings

Figure 1 is an overall schematic diagram of the device for hydrogen production through direct electrolysis of seawater without desalination provided by this invention in Embodiment 1;
Figure 2 is an overall schematic diagram of the device for hydrogen production through direct electrolysis of seawater without desalination provided by this invention in Embodiment 2;
Figure 3 is an overall schematic diagram of the device for hydrogen production through direct electrolysis of seawater without desalination provided by this invention in Embodiment 3;
Figure 4 is an LSV curve diagram of the device for hydrogen production through direct electrolysis of seawater without desalination provided by this invention in Embodiment 1;
Figure 5 is a stable operation effect diagram of the device for hydrogen production through direct electrolysis of seawater without desalination provided by this invention in Embodiment 1;
Figure 6 is a stable operation effect diagram of the device for hydrogen production through direct electrolysis of seawater without desalination provided by this invention in Embodiment 3;

List of reference numerals:
1- Energy supply module A, 2- Anode plate A, 3- Anode catalytic electrode A, 4- Ion transfer layer A, 5- Cathode catalytic electrode A, 6- Cathode plate A, 7- Anode electrolysis chamber A, 8-Cathode electrolysis chamber A, 9- Porous insulation net groove, 10- Solution mass transfer layer A, 11- Oxygen scrubber A, 12- Oxygen dryer A, 13- Oxygen collection bottle A, 14- Hydrogen scrubber A, 15- Hydrogen dryer A, 16- Hydrogen collection bottle A, 17- Catalytic electrolysis module A;
18- Energy supply module B, 19- Anode porous insulation net groove, 20- Anode plate B, 21-Anode electrolysis chamber B, 22- Anode catalytic electrode B, 23- Ion transfer layer B, 24-Cathode catalytic electrode B, 25- Cathode plate B, 26- Cathode electrolysis chamber B, 27-Cathode porous insulation net groove, 28- Solution mass transfer layer B, 29- Oxygen scrubber B, 30- Oxygen dryer B, 31- Oxygen collection bottle B, 32- Hydrogen scrubber B, 33- Hydrogen dryer B, 34- Hydrogen collection bottle B, 35- Catalytic electrolysis module B,
36- Energy supply module C, 37- Anode solution mass transfer layer, 38- Anode plate C, 39-Anode catalytic electrode C, 40- Ion transfer layer C, 41- Cathode catalytic electrode C, 42-Cathode plate C, 43- Cathode solution mass transfer layer, 44- Oxygen scrubber C, 45- Oxygen dryer C, 46- Oxygen collection bottle C, 47- Hydrogen scrubber C, 48- Hydrogen dryer C, 49-Hydrogen collection bottle C, 50- Catalytic electrolysis module C.

### Detailed Description of Embodiments

To make the objectives, technical solutions, and advantages of the embodiments of this invention clearer, the following will combine the embodiments of this invention with the attached drawings to clearly and completely describe the technical solutions in the embodiments of this invention. Obviously, the described embodiments are part of the embodiments of this invention, not all of them. Usually, the components described and shown in the drawings here can be arranged and designed in various different configurations.

Accordingly, the following detailed description of the embodiments of the present invention provided in the accompanying drawings is not intended to limit the scope of the present invention for which protection is claimed, but merely indicates selected embodiments of the present invention. Based on the embodiments in the present invention, all other embodiments obtained by a person of ordinary skill in the art without creative labor fall within the scope of protection of the present invention.

It should be noted that in the absence of conflict, the features in the embodiments and the embodiments in this invention can be combined with each other.

It is important to note that similar reference numbers and letters in the drawings denote similar items, so once an item is defined in one drawing, it does not need to be further defined and explained in subsequent drawings.

In the description of the embodiments of this invention, it is necessary to understand that the orientation or positional relationship indicated is based on the orientation or positional relationship shown in the drawings, or the invention product's usual placement orientation or positional relationship when in use, or the orientation or positional relationship commonly understood by those skilled in the art, or the invention product's usual placement orientation or positional relationship, merely for the convenience of describing this invention and simplifying the description, and does not indicate or imply that the device or element must have a specific orientation, be constructed and operated in a specific orientation, and thus, should not be considered as limiting the invention. Furthermore, terms such as "first," "second," are only for descriptive purposes and cannot be understood as indicating or implying relative importance.

In the description of the embodiments of this invention, it is also necessary to note that unless explicitly stated or limited otherwise, the terms "mounted," "connected," and "coupled" should be broadly understood. For example, they can be fixed connections, detachable connections, or integral connections; they can be mechanical connections or electrical connections; they can be direct connections or indirect connections through intermediaries, or they can be internal communications between two elements. For those of ordinary skill in the art, the specific meanings of the above terms in this invention can be understood according to specific situations.

### Embodiment 1

This Embodiment specifically provides a device for direct electrolysis hydrogen production from seawater without desalination. When applied, this device can be immersed in various non-pure water solutions such as seawater, sludge, swamps, etc., promoting the self-driven electrolyte to spontaneously induce the phase change of seawater (non-pure water solution) under the driving force of the interface pressure difference between the non-pure water system and the self-driven electrolyte, and producing hydrogen through electrolysis reaction.

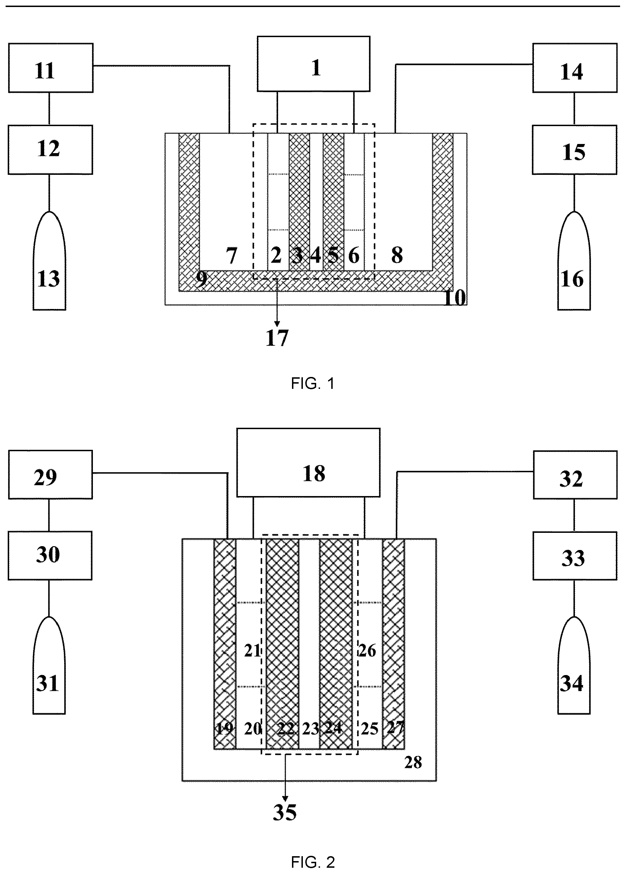

As shown in Figure 1, the hydrogen production device comprises: a self-capturing container and a catalytic electrolysis module A 17 set within the self-capturing container, spontaneously obtaining water without impurity ions. Then, through the catalytic electrolysis module A 17, the self-capturing container is divided into an anode electrolysis chamber A 7 and a cathode electrolysis chamber A 8. Both the anode electrolysis chamber A 7 and the cathode electrolysis chamber A 8 contain self-driven electrolyte for separately producing oxygen and hydrogen. The usable self-driven electrolytes comprise, but are not limited to, K₂CO₃, NaOH, KOH, Ca(OH)₂, Na₂CO₃, etc., in solid form or solution, or other hygroscopic media such as glycerol, polyethylene glycol, sodium acrylate, sulfuric acid, etc.

### ① Self-Capture Container

The self-capture container comprises: a porous insulation net groove 9 and a solution mass transfer layer 10 covering the exterior of the porous insulation net groove 9. The porous insulation net groove 9 has a cavity within which the catalytic electrolysis module A 17 is placed. The solution mass transfer layer 10 blocks impurities in seawater (non-pure water solution). In practical applications, the solution mass transfer layer 10 can be made of a TPU film, PDMS film, or PTFE film with a pore size of 0.1~100um; besides, the solution mass transfer layer 10 can also be made of graphene, PVDF particles, or PTFE particles through spraying, screen printing, or electrostatic adsorption to form a porous solution mass transfer layer.

The solution mass transfer layer 10 covers the entire exterior of the porous insulation net groove 9. When the entire system is immersed in seawater (non-pure water solution), the solution mass transfer layer 10 isolates the seawater (non-pure water solution) and drives the mass transfer of the solution, inducing the self-driven electrolyte to transform seawater (non-pure water solution) into impurity-free liquid water.

### ② Catalytic Electrolysis Module

The catalytic electrolysis module A 17 comprises: an ion transfer layer A 4, and anode catalytic electrode A 3 and cathode catalytic electrode A 5 symmetrically arranged on both sides of the ion transfer layer A 4. The ion transfer layer A 4 comprises but is not limited to polyester diaphragm, nylon diaphragm, ceramic porous diaphragm, anion exchange membrane, or polymer films such as PVA.

The surfaces of the anode catalytic electrode A 3 and cathode catalytic electrode A 5 are respectively attached to the anode plate A 2 and cathode plate A 6, which are located in the anode electrolysis chamber A 7 and cathode electrolysis chamber A 8. The ion transfer layer A 4, anode catalytic electrode A 3, cathode catalytic electrode A 5, anode plate A 2, and cathode plate A 6 are all embedded at the bottom of the self-capture container's inner cavity, thus isolating the porous insulation net groove 9 into the anode electrolysis chamber A 7 and cathode electrolysis chamber A 8 for storing the self-driven electrolyte.

Seawater (non-pure water solution) enters the anode electrolysis chamber A 7 and cathode electrolysis chamber A 8 and undergoes a phase change induced by the self-driven electrolyte stored within them. A hydrogen evolution reaction occurs on the surface of the cathode catalytic electrode A 5 to produce hydrogen gas, as follows:

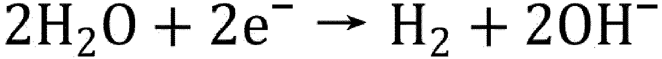

The produced OH⁻ ions are transferred through the ion transfer layer A 4 (polyester diaphragm, nylon diaphragm, ceramic porous diaphragm, anion exchange membrane, or PVA and other polymer films) to the anode catalytic electrode A 3, where an oxidation reaction occurs to produce oxygen gas, as follows:

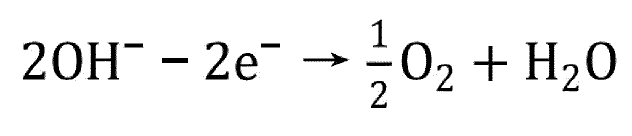

The available anode catalytic electrodes (3) comprise but are not limited to: foam nickel molybdenum, iridium-tantalum, ruthenium-iridium, NiFe-LDH, NiFeCu alloy, NiₓFe_{y}O_{z} catalyst-loaded titanium mesh; the available cathode catalytic electrodes (5) comprise but are not limited to: platinum mesh, nickel-plated platinum mesh, FeₓCo_{y}Ni_{z} type catalysts, etc.

### ③Energy Supply Module

The energy supply module A 1 is connected to both the anode plate A 2 and cathode plate A 6 to supply power to them. For example, the energy source of the energy supply module A 1 can be solar energy, wind energy, or other renewable energy sources converted into electrical energy. The electricity generated by solar energy, wind energy, or stored in the energy supply module A 1 from thermal power is connected to both the anode plate A 2 and cathode plate A 6 to provide electrical energy for the hydrogen production reaction. The energy supply module A 1 powers the catalytic electrolysis module A 17 to spontaneously obtain impurity-free water directly from seawater (non-pure water solution) and achieve hydrogen production through electrolytic catalysis, realizing the direct electrolysis of seawater (non-pure water solution) without desalination. Additionally, the energy supply module A 1 can directly utilize thermal power, hydroelectric power, and further, it can be coupled with wind power, photovoltaics, nuclear energy, and other renewable energy sources to achieve green hydrogen production, thus realizing the energy conversion of unstable renewable energy sources and facilitating the stable storage of hydrogen energy.

Based on the provided seawater direct electrolysis hydrogen production device without desalination, its working principle is as follows:
Firstly, the energy supply module A 1 provides electrical power to the catalytic electrolysis module A 17;
Secondly, the seawater direct electrolysis hydrogen production system without desalination is directly immersed in water. Under the action of the pressure difference or osmotic pressure between seawater (non-pure water solution) and the self-driven electrolyte, seawater (non-pure water solution) enters the self-capture container through the solution mass transfer layer A 10, where it is induced by the low vapor pressure self-driven electrolyte to undergo a phase change and form an electrolyte. Meanwhile, the hydrophobic action of the solution mass transfer layer A 10 blocks the impurities dissolved in seawater (non-pure water solution) outside the system;
Finally, the catalytic hydrogen production module electrolyzes the pure water induced by the phase change of the self-driven electrolyte to produce hydrogen. The water in the self-driven electrolyte is continuously electrolyzed and consumed, inducing the regeneration of the self-driven electrolyte, maintaining the pressure difference, and realizing the system's self-circulating excitation drive for hydrogen production without additional energy consumption. The total energy consumption is comparable to that of freshwater electrolysis hydrogen production.

The seawater direct electrolysis hydrogen production device without desalination provides electrical energy through the energy supply module A 1, obtains pure liquid water through the phase change induced by the self-driven electrolyte, and then uses the principle of catalytic electrolysis to produce hydrogen gas. On one hand, it can achieve a dynamic continuous process of spontaneous hydrogen capture in any seawater (non-pure water solution) environment without time and space differences; on the other hand, it can achieve energy conversion and stable storage for unstable renewable energy sources, providing technical means for the construction of future energy systems.

In practical applications, the assembly method of the seawater direct electrolysis hydrogen production device without desalination is not only suitable for regular shapes but can also be replaced with irregular shapes to adapt to different regional environments.

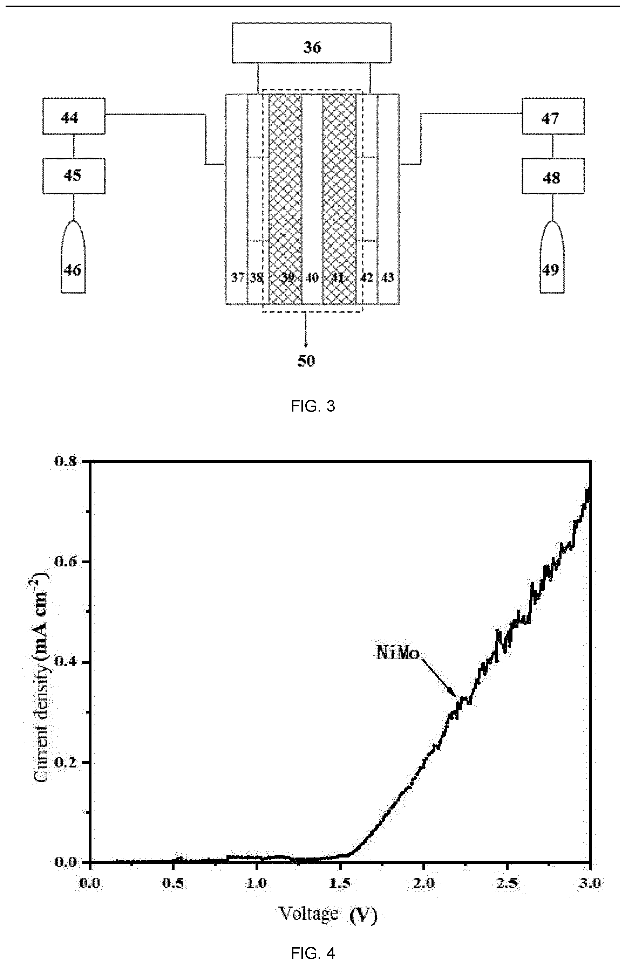

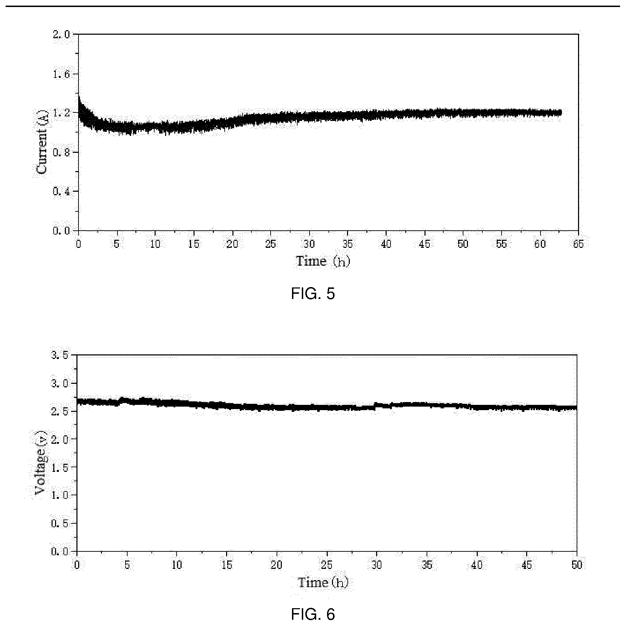

Its implementation effect: The anode and cathode electrolysis chambers contain self-driven electrolytes, inducing the phase change of the solution to form an electrolyte. The system achieves a high current density of 200mA/cm² under a voltage of 2V, as shown in Figure 4, indicating high efficiency. The system can operate stably for over 60 hours at room temperature, under a high current density of 2V, 200mA/cm², demonstrating good stability under high current density, as shown in Figure 5.

### Embodiment 2

As shown in Figure 2, in this Embodiment, a seawater direct electrolysis hydrogen production device without desalination is provided, powered by electricity generated from solar energy, wind energy, or other renewable energy sources stored in the energy supply module B 18. The energy supply module B 18 is connected to the anode plate B 20 and cathode plate B 25 in the in-situ self-capture hydrogen production device to provide electrical energy for the hydrogen production reaction.

As shown in Figure 2, the catalytic electrolysis module B 35 consists of the anode catalytic electrode B 22, the ion transfer layer B 23, and the cathode catalytic electrode B 24. The catalytic electrolysis module B 35 is closely attached to the anode plate B 20 and the anode porous insulation net groove 19, as well as the cathode plate B 25 and the cathode porous insulation net groove 27 on both sides, respectively. Both the anode electrolysis chamber B 21 and the cathode electrolysis chamber B 26, which are designed for storing self-driven electrolytes, are located at the anode plate B 20 and the cathode plate B 25, respectively. The entire system is immersed in seawater (non-pure water solution), and spontaneous mass transfer occurs through the solution mass transfer layer B 28. Impurities are isolated from the system, and the self-driven electrolyte induces a phase change in the anode electrolysis chamber B 21 and the cathode electrolysis chamber B 26 to form liquid water. A hydrogen evolution reaction occurs on the surface of the cathode catalytic electrode B 24, with the reaction formula as follows:

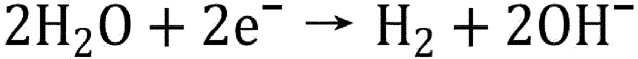

The produced OH- is transferred through the ion transfer layer B 23 (anion exchange membrane) to the anode catalytic electrode B 22, where an oxidation reaction occurs to produce oxygen, with the reaction formula as follows:

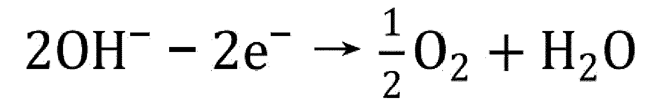

The seawater desalination-free in-situ direct electrolysis hydrogen production device provided above operates as follows:
Firstly, a self-driven electrolyte, either solid K₂CO₃ or concentrated K₂CO₃ solution, is placed in the anode electrolysis chamber B 21 of the system (in fact, whether the self-driven electrolyte is placed on the anode side or the cathode side, once it forms an electrolyte, it will permeate to the other side), the cathode electrolysis chamber B 26 is left empty, and power is supplied to the catalytic electrolysis module B 35 by the energy supply module B 18, with the specifics of the energy supply module B 18 referred to in Embodiment 1, which is not repeated here;
Secondly, the seawater desalination-free in-situ direct electrolysis hydrogen production device is directly immersed in seawater (non-pure water solution). Under the pressure difference between the seawater (non-pure water solution) interface and the self-driven electrolyte interface, water is induced to form liquid water by the low vapor pressure K₂CO₃ self-driven electrolyte through the solution mass transfer layer B 28, while the hydrophobic action of the solution mass transfer layer B 28 blocks the impurities dissolved in the non-pure water from entering the system; The water in the K₂CO₃ solution in the anode electrolysis chamber B21 wets the surface of the cathode catalytic electrode B 24, where water is reduced to hydrogen gas and OH⁻ on the cathode side, and OH⁻ is transferred to the anode side through the anion exchange membrane to oxidize and produce oxygen gas.
Finally, the catalytic hydrogen production module electrolyzes the pure water captured by the deliquescent substance of K₂CO₃ under the catalytic system, continuously consuming the water in the self-driven electrolyte, inducing the regeneration of the electrolyte, maintaining the pressure difference at the interface, thus forming a continuous and stable electrolysis hydrogen production process.

This seawater desalination-free in-situ direct electrolysis hydrogen production device provides electrical energy through the energy supply module B 18, induces phase change in pure liquid water through the self-driven electrolyte, and then utilizes the principle of catalytic electrolysis to produce hydrogen gas. On one hand, it can achieve a dynamic continuous process of spontaneous hydrogen capture in any non-pure water environment without temporal and spatial differences; on the other hand, it can achieve energy conversion and stable storage for unstable renewable energy sources, providing technical means for the construction of future energy systems.

In practical applications, the assembly method of this seawater desalination-free in-situ direct electrolysis hydrogen production device is not only suitable for regular shapes but can also be replaced with irregular shapes to adapt to different regional environments.

### Embodiment 3

In this Embodiment, a seawater desalination-free in-situ direct electrolysis hydrogen production device is provided, powered by electricity generated from renewable energy sources such as solar and wind energy or thermal power stored in the energy supply module C 36. The energy supply module C 36 is connected to the anode electrode C 38 and the cathode electrode C 42 of the in-situ self-capturing hydrogen production device to provide electrical energy for the hydrogen production reaction.

As shown in Figure 3, the outer frame of the container is formed jointly by the anode plate C 38 and the cathode plate C 42, with the anode catalytic electrode C 39, the ion exchange layer C 40, and the cathode catalytic electrode C 41 set between the anode plate C 38 and the cathode plate C 42. The anode solution mass transfer layer C 37 and the cathode solution mass transfer layer C 43 are closely attached to the outer sides of the anode plate C 38 and the cathode plate C 42, respectively, to automatically capture impurity-free water into the container. The anode catalytic electrode C 39 and the cathode catalytic electrode C 41 are respectively attached to the surfaces of the corresponding anode plate C 38 and cathode plate C 42.

The catalytic electrolysis module C 50 consists of the anode plate C 38, the anode catalytic electrode C 39, the ion exchange layer C 40, the cathode catalytic electrode C 41, and the cathode plate C 42, with the anode solution mass transfer layer C 37 and the cathode solution mass transfer layer C 43 closely attached to both sides of the catalytic electrolysis module C 50. Exhaust grooves are designed on the anode plate C38 and the cathode plate C 42 to allow the oxygen and hydrogen gases produced by electrolysis to be expelled separately.

The entire system is immersed in seawater (non-pure water solution), with the anode solution mass transfer layer C 37 and the cathode solution mass transfer layer C 43 isolating liquid water, driving spontaneous mass transfer, and inducing phase change through the self-driven electrolyte. The ion exchange layer C 40 uses a self-driven electrolyte layer, which has the function of inducing phase change and ion conduction capability. A hydrogen evolution reaction occurs on the surface of the cathode catalytic electrode C 41, with the reaction formula as follows:

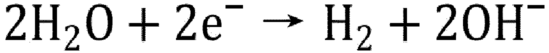

The produced hydrogen gas is passed through the hydrogen scrubber C 47 and the hydrogen dryer C 48 to remove entrained impurities, collected through pipelines into the hydrogen collection bottle C 49 for storage and further use. The produced OH⁻ is transferred through the ion exchange layer C 40 (the ion exchange layer C 40 is made of a self-driven electrolyte layer formed by compounding KOH in a PVA gel) to the anode catalytic electrode C 39, where an oxidation reaction occurs to produce oxygen gas, with the reaction formula as follows:

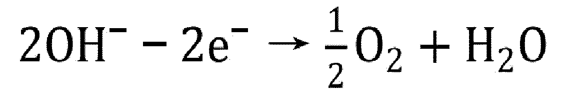

The oxygen gas produced by the oxygen evolution reaction is collected through pipelines, passed through the oxygen scrubber C 44 and the oxygen dryer C 45, and collected into the oxygen collection bottle C 46.

Based on the seawater desalination-free in-situ direct electrolysis hydrogen production device provided above, its working principle is as follows:
Firstly, the energy supply module C 36 provides electrical power to the catalytic electrolysis module C 50;
Secondly, the seawater desalination-free in-situ direct electrolysis hydrogen production system is directly immersed in seawater (non-pure water solution). Under the pressure difference between the seawater (non-pure water solution) and the self-driven electrolyte interface, water is driven into the self-capturing container by the self-driven electrolyte layer (alkaline polymer material, such as PAA-KOH composite membrane, PVA-KOH composite membrane, PVA-K₂CO₃ composite membrane) through the anode solution mass transfer layer 37 and the cathode no-energy-consumption solution mass transfer layer 43, inducing phase change in the self-driven electrolyte. Meanwhile, the hydrophobic action of the anode solution mass transfer layer 37 and the cathode solution mass transfer layer 43 blocks the impurities dissolved in the seawater (non-pure water solution) from entering the system; The water inside the self-driven electrolyte is oxidized and reduced into oxygen gas and hydrogen gas, with the process producing OH⁻transferred by the self-driven electrolyte.
Finally, the catalytic hydrogen production module electrolyzes the pure water induced by the phase change of the self-driven electrolyte under the catalytic system, continuously consuming the water in the self-driven electrolyte, inducing the regeneration of the electrolyte, maintaining the pressure difference at the interface stable, thus forming a continuous and stable seawater (non-pure water solution) desalination-free in-situ direct electrolysis hydrogen production process.

This seawater desalination-free in-situ direct electrolysis hydrogen production device provides electrical energy through the energy supply module C 36, induces phase change in the water solution through the self-driven electrolyte, and then utilizes the principle of catalytic electrolysis to produce hydrogen gas. On one hand, it can achieve a dynamic continuous process of spontaneous hydrogen capture in any non-pure water environment without temporal and spatial differences; on the other hand, it can achieve energy conversion and stable storage for unstable renewable energy sources, providing technical means for the construction of future energy systems.

In practical applications, the assembly method of this seawater desalination-free in-situ direct electrolysis hydrogen production device is not only suitable for regular shapes but can also be replaced with irregular shapes to adapt to different regional environments.

The implementation effect: The self-driven electrolyte serves as the ion exchange layer, both spontaneously inducing phase change in the water solution and conducting ions. The system can operate stably for over 50 hours at room temperature under a current density of 100mA/cm2 and a voltage of about 2.65v, demonstrating good stability under high current density, as shown in Figure 6.

### Embodiment 4

In this Embodiment, a seawater desalination-free in-situ direct electrolysis hydrogen production system is also provided, which includes the seawater desalination-free in-situ direct electrolysis hydrogen production device described in Embodiment 1 above. This hydrogen production system also includes:
An oxygen collection unit and a hydrogen collection unit, each of which is connected to the anode electrolysis chamber A 7 and the cathode electrolysis chamber A 8, respectively, to dry, collect, and further utilize the produced oxygen and hydrogen gases.

The oxygen collection unit includes: The oxygen scrubber A 11 connected to the anode electrolysis chamber A 7, which is connected to the oxygen dryer A 12, and the oxygen dryer A 12 is connected to the oxygen collection bottle A 13. The oxygen gas produced in the anode electrolysis chamber A 7 through the oxygen evolution reaction is passed through pipelines, washed and dried by the oxygen scrubber A 11 and the oxygen dryer A 12, and collected into the oxygen collection bottle A 13 for storage and further use. The hydrogen collection unit includes: The hydrogen scrubber A 14 connected to the cathode electrolysis chamber A 8, which is connected to the hydrogen dryer A 15, and the hydrogen dryer A 15 is connected to the hydrogen collection bottle A 16. The hydrogen gas produced in the cathode electrolysis chamber A 8 through the hydrogen evolution reaction is passed through the hydrogen scrubber A 14 and the hydrogen dryer A 15 to remove entrained impurities, collected through pipelines into the hydrogen collection bottle A 16 for storage and further use.

Similarly, this hydrogen production system can also include the seawater desalination-free in-situ direct electrolysis hydrogen production device described in Embodiment 2 above. This hydrogen production system also includes:
An oxygen collection unit and a hydrogen collection unit, each of which is connected to the anode electrolysis chamber B 21 and the cathode electrolysis chamber B 26, respectively, to dry, collect, and further utilize the produced oxygen and hydrogen gases.

The oxygen collection unit includes: the oxygen scrubber B 29 connected to the anode electrolysis chamber B 21, which is connected to the oxygen dryer B 30, and the oxygen dryer B 30 is connected to the oxygen collection bottle B 31. The oxygen gas produced in the anode electrolysis chamber B 21 through the oxygen evolution reaction is passed through pipelines, washed and dried by the oxygen scrubber B 29 and the oxygen dryer B 30, and collected into the oxygen collection bottle B 31 for storage and further use. The hydrogen collection unit includes: The hydrogen scrubber B 32 connected to the cathode electrolysis chamber B 26, which is connected to the hydrogen dryer B 33, and the hydrogen dryer B 33 is connected to the hydrogen collection bottle B 34. The hydrogen gas produced in the cathode electrolysis chamber B 26 through the hydrogen evolution reaction is passed through the hydrogen scrubber B 32 and the hydrogen dryer B 33 to remove entrained impurities, collected through pipelines into the hydrogen collection bottle B 34 for storage and further use.

Similarly, this hydrogen production system can also include the seawater desalination-free in-situ direct electrolysis hydrogen production device described in Embodiment 3 above. This hydrogen production system also includes:
An oxygen collection unit and a hydrogen collection unit, each of which is connected to the anode electrolysis chamber C and the cathode electrolysis chamber C, respectively, to dry, collect, and further utilize the produced oxygen and hydrogen gases.

The oxygen collection unit includes: The oxygen scrubber C 44 connected to the anode electrolysis chamber, which is connected to the oxygen dryer C 45, and the oxygen dryer C 45 is connected to the oxygen collection bottle C 46. The oxygen gas produced in the anode electrolysis chamber through the oxygen evolution reaction is passed through pipelines, washed and dried by the oxygen scrubber C 44 and the oxygen dryer C 45, and collected into the oxygen collection bottle C 46 for storage and further use. The hydrogen collection unit includes: The hydrogen scrubber C 47 connected to the cathode electrolysis chamber, which is connected to the hydrogen dryer C 48, and the hydrogen dryer C 48 is connected to the hydrogen collection bottle C 49. The hydrogen gas produced in the cathode electrolysis chamber through the hydrogen evolution reaction is passed through the hydrogen scrubber C 47 and the hydrogen dryer C 48 to remove entrained impurities, collected through pipelines into the hydrogen collection bottle C 49 for storage and further use.

The entire system can be designed as a portable or large-scale integrated system according to the demand for hydrogen production. It can be used in any non-pure water system environment, including sludge, swamps, rivers, lakes, and industrial wastewater, without being limited by time or space, to perform continuous in-situ hydrogen production work.

### Embodiment 5

In this Embodiment, a method for seawater desalination-free in-situ direct electrolysis hydrogen production is also provided, applying the seawater desalination-free in-situ direct electrolysis hydrogen production device described in Embodiment 1, Embodiment 2, or Embodiment 3. This hydrogen production method includes:
Immersing the seawater desalination-free in-situ direct electrolysis hydrogen production device into non-pure water to achieve immersed electrolysis hydrogen production in non-pure water; or directly placing the seawater desalination-free in-situ direct electrolysis hydrogen production device in the atmosphere to capture atmospheric moisture for hydrogen production;
Starting the energy supply module to power the catalytic electrolysis module in the seawater desalination-free in-situ direct electrolysis hydrogen production device, and after the decomposition, the produced oxygen and hydrogen gases are subjected to purification, drying, and other post-treatment processes before collection for further use.

Through the self-capturing hydrogen production device directly immersed in water or the atmosphere, under the driving action of the interface pressure difference, through the solution mass transfer layer, the seawater (non-pure water solution) desalination-free in-situ direct electrolysis hydrogen production is induced by the self-driven electrolyte to form an electrolyte, while the hydrophobic action of the solution mass transfer layer blocks the impurities dissolved in non-pure water from entering the system. In the catalytic system, the pure water induced by the phase change of the self-driven electrolyte is electrolyzed for hydrogen production, and the self-driven electrolyte is regenerated, maintaining the interface pressure difference, realizing a self-circulating excitation drive of the system without additional energy consumption, with the total energy consumption comparable to that of freshwater electrolysis hydrogen production.

This invention is not limited to the above-described embodiments. Any variations in form or structure that fall within the scope defined by the claims of this invention are considered to be within the protection scope of this invention.

## Claims

1. A method for direct electrolysis hydrogen production from seawater without desalination, **characterized in that** the hydrogen production method comprises:
blocking seawater and impurity ions through the solution mass transfer layer, selectively allowing the passage of water vapor, inducing the phase change of water vapor to liquid to obtain water without impurity ions under the action of interface vapor pressure or osmotic pressure difference by the self-driven electrolyte;
the cathode side in hydrogen production electrolysis reacts with the water in the self-driven electrolyte to produce hydrogen and OH-, transferring OH- ions to the anode side through ion transfer and producing oxygen by the anode side through oxygen evolution reaction;
wherein, during the hydrogen production electrolysis process, as the water in the self-driven electrolyte is continuously consumed by electrolysis, it induces the regeneration of the self-driven electrolyte, forming a self-circulating excitation drive for hydrogen production without additional energy consumption.

2. A device for direct electrolysis hydrogen production from seawater without desalination, **characterized in that** the hydrogen production device applies the method for direct electrolysis hydrogen production from seawater without desalination as claimed in claim 1, the hydrogen production device comprises:
a self-capturing container, spontaneously obtaining water without impurity ions;
a catalytic electrolysis module set within the self-capturing container, dividing the self-capturing container into an anode electrolysis chamber and a cathode electrolysis chamber, and forming a self-driven electrolyte at least in the anode electrolysis chamber or cathode electrolysis chamber, where the self-driven electrolyte first electrolyzes in the cathode electrolysis chamber to produce hydrogen and OH-, and OH- passes through the catalytic electrolysis module into the anode chamber and electrolyzes to produce oxygen.

3. The device for direct electrolysis hydrogen production from seawater without desalination according to claim 2, **characterized in that** the self-capturing container comprises:
a porous insulation net groove, with a cavity inside the porous insulation net groove, which houses the catalytic electrolysis module;
a solution mass transfer layer covering the outside of the porous insulation net groove, blocking impurities in seawater through this layer.

4. The device for direct electrolysis hydrogen production from seawater without desalination according to claim 3, **characterized in that** the catalytic electrolysis module comprises:
an ion transfer layer, used for transferring OH- ions between the anode electrolysis chamber and the cathode electrolysis chamber, and blocking the mixing of O2 produced on the anode side with H2 produced on the cathode side;
anode catalytic electrodes and cathode catalytic electrodes symmetrically arranged on both sides of the ion transfer layer, with anode plates and cathode plates respectively attached to the sides of the anode catalytic electrodes and cathode catalytic electrodes, forming the anode electrolysis chamber and cathode electrolysis chamber with the self-capturing container.

5. The device for direct electrolysis hydrogen production from seawater without desalination according to claim 2, **characterized in that** the self-capturing container comprises:
a solution mass transfer layer, with a cavity inside the solution mass transfer layer, which houses the catalytic electrolysis module;
anode plates and cathode plates closely attached to both sides of the catalytic electrolysis module, with an anode porous insulation net groove tightly attached between the anode plate and the cavity, and a cathode porous insulation net groove tightly attached between the cathode plate and the cavity;
wherein, the anode plates and cathode plates respectively have the anode electrolysis chamber and cathode electrolysis chamber established.

6. The device for direct electrolysis hydrogen production from seawater without desalination according to claim 5, **characterized in that** the catalytic electrolysis module comprises:
an ion transfer layer, used for transferring OH- ions between the anode electrolysis chamber and the cathode electrolysis chamber;
anode catalytic electrodes and cathode catalytic electrodes symmetrically arranged on both sides of the ion transfer layer, with anode plates closely attached to the anode catalytic electrodes, and cathode plates closely attached to the cathode catalytic electrodes.

7. A device for direct electrolysis hydrogen production from seawater without desalination, **characterized in that** the hydrogen production device uses the method for direct electrolysis hydrogen production from seawater without desalination according to 1, the hydrogen production device comprises:
a cavity and a self-driven electrolyte layer set within the cavity, dividing the cavity into an anode electrolysis chamber and a cathode electrolysis chamber, with solution mass transfer layers respectively set for inducing the transfer of water without impurity ions in the anode electrolysis chamber and cathode electrolysis chamber;
a catalytic electrolysis module set within the cavity, electrolyzing the water in the self-driven electrolyte layer in the cathode electrolysis chamber to produce hydrogen and OH-, and OH-passing through the self-driven electrolyte layer into the anode electrolysis chamber and electrolyzing to produce oxygen.

8. The device for direct electrolysis hydrogen production from seawater without desalination according to 7, **characterized in that** the catalytic electrolysis module comprises:
anode catalytic electrodes and cathode catalytic electrodes closely attached to both sides of the self-driven electrolyte layer, with anode plates and cathode plates respectively closely attached to the sides of the anode catalytic electrodes and cathode catalytic electrodes;
wherein, the anode plates and cathode plates respectively have exhaust grooves established, and the sides of the anode plates and cathode plates are respectively attached with the solution mass transfer layer.

9. The device for direct electrolysis hydrogen production from seawater without desalination according to any one of claims 3, 5, and 7, **characterized in that** the solution mass transfer layer adopts any one of TPU membrane, PDMS membrane, PTFE membrane with a pore size of 0.1~100um;
or the solution mass transfer layer is made of graphene, PVDF particles, PTFE particles through spraying, screen printing, electrostatic adsorption.

10. The device for direct electrolysis hydrogen production from seawater without desalination according to claim 2, **characterized in that** it also comprises an energy supply module, the energy supply module is electrically connected with the anode plate and cathode plate, respectively supplying power to the anode plate and cathode plate.

11. A system for direct electrolysis hydrogen production from seawater without desalination, **characterized in that** the hydrogen production system comprises at least one device for direct electrolysis hydrogen production from seawater without desalination according to any one of claims 2-10, the hydrogen production system also comprises:
at least one oxygen collection unit and at least one hydrogen collection unit, each of the oxygen collection units and hydrogen collection units are respectively connected with the anode electrolysis chamber and cathode electrolysis chamber.

12. The system for direct electrolysis hydrogen production from seawater without desalination according to claim 11, **characterized in that** the oxygen collection unit comprises: an oxygen scrubber connected with the anode electrolysis chamber, the oxygen scrubber is connected with an oxygen dryer, the oxygen dryer is connected with an oxygen collection bottle;
the hydrogen collection unit comprises: a hydrogen scrubber connected with the cathode electrolysis chamber, the hydrogen scrubber is connected with a hydrogen dryer, the hydrogen dryer is connected with a hydrogen collection bottle.
